# FASCICULE DE BREVET EUROPEEN

(11) **EP 4 427 910 B1**
(45) Date de publication et mention de la délivrance du brevet: **06.05.2026**
(21) Numéro de dépôt: 24160699.5
(22) Date de dépôt: 29.02.2024
(51) Int. Cl.: B29C 51/00, B29C 51/14, B65D 53/02, B29C 51/44, B29K 23/00, B29L 31/56, B65D 39/12, B65D 43/02, B65D 53/00

(54) **PROCÉDÉ DE FABRICATION D'UN SYSTÈME DE FERMETURE ÉTANCHE, PASTEURISABLE ET STÉRILISABLE POUR BOCAUX AVEC COUVERCLE SÉPARÉ, ET SYSTÈME DE FERMETURE SUSCEPTIBLE D ÊTRE OBTENU PAR LE PROCÉDÉ**
VERFAHREN ZUR HERSTELLUNG EINES STERILISIERBAREN, ABDICHTENDEN VERSCHLUSSSYSTEMS FÜR EINEN BEHÄLTER MIT SEPARATEM DECKEL UND NACH DIESEM VERFAHREN ERHÄLTLICHES VERSCHLUSSSYSTEM
PROCESS FOR MANUFACTURING A PASTEURIZABLE STERILIZABLE CLOSURE FOR JARS WITH A SEPARATE LID, AND CLOSURE OBTAINABLE BY THE PROCESS

(30) Priorité: 07.03.2023 FR 2302109
(43) Date de publication de la demande: 11.09.2024
(73) Titulaire: Techna, 67550 Vendenheim (FR)
(72) Inventeur: RIDE, Christophe, 67370 WIWERSHEIM (FR); WALTER, Philippe, 67160 SEEBACH (FR); LANG, Freddy, 67260 SCHOPPERTEN (FR)
(74) Mandataire: Cabinet Bleger-Rhein-Poupon

(56) Documents cités:
- DE-T2- 69 100 484
- FR-A1- 2 969 584
- US-A1- 2003 057 217
- US-A1- 2010 263 328
- US-B2- 9 884 716

## Description

La présente invention concerne le domaine général des contenants utilisés dans l'industrie alimentaire et, plus particulièrement, des contenants en verre, type bocaux, destinés à être refermés hermétiquement par un couvercle, avant pasteurisation - stérilisation (appertisation), mise sous vide et conservation.

La présente invention concerne, plus particulièrement, un procédé de fabrication d'un système de fermeture, de type couvercle, en une matière multicouches constituée, au moins, d'une couche EVOH (éthylène alcool vinylique) en sandwich entre deux couches de polypropylène épais, ledit procédé incluant par ailleurs l'intégration, préférentiellement de manière automatisée, d'un joint d'étanchéité au niveau de la surface interne du couvercle, destinée à venir en contact avec un contenant à refermer.

Traditionnellement, dans l'état de la technique, afin de conserver des aliments divers, il est connu depuis de très nombreuses années, de les placer dans des contenants, en particulier des bocaux, généralement en verre, avant de refermer hermétiquement ces derniers au moyen d'un couvercle puis de les stériliser à une température supérieure à 100°C, ou bien de les pasteuriser, à une température inférieure ou égale à 100°C.

Cette étape peut être notamment réalisée au moyen d'un stérilisateur autoclave, et permet une réduction importante de la charge des micro-organismes présents dans le produit et/ou la préparation alimentaire de base, évitant ainsi tout développement microbien, pour une conservation plus ou moins de longue durée des aliments selon le traitement thermique appliqué. Cette étape nécessite au préalable la mise sous vide du contenant avec ce dispositif de fermeture.

Cela étant, la fermeture des bocaux en verre, avec couvercle séparé et joint d'étanchéité, rencontre actuellement une problématique, en particulier dans la pose du joint et dans la mise en place du couvercle, avec ledit joint, sur la partie supérieure, ou bague, du bocal.

En effet, la pose du joint sur la face inférieure d'un couvercle en verre est un travail qui ne peut être réalisé que manuellement et individuellement pour chaque bocal à préparer, mobilisant, par conséquent, du personnel en nombre.

Il en est de même pour la pose du couvercle avec le joint sur le bocal.

En outre, le couvercle, muni du joint, doit être maintenu, par exemple au moyen d'au moins deux clips, ou par une anse métallique, sur le bocal, pendant la phase de stérilisation (appertisation) ou de pasteurisation, les clips pouvant être retirés après refroidissement.

Or, la pose du joint sur la face inférieure du couvercle, de même que la pose du couvercle et du joint sur le contenant, sont des opérations difficilement automatisables, ce qui engendre un coût de main d'œuvre important pour l'utilisateur, et nuit au développement de gammes de produits alimentaires dans de tels contenants dans les milieux industriels ou semi industriels.

En conséquence, la mise en œuvre de ce type de bocaux en verre est délaissée par les industriels, mais également par les artisans, le procédé de pose du joint sur le couvercle, et de l'ensemble ainsi constitué sur le bocal, étant chronophage et compliqué.

A noter également que l'utilisation de verre pour le couvercle est source de fragilité lors des manipulations.

Également, le couvercle est, dans certains cas, aussi lourd, voire même plus lourd que le bocal en lui-même, en particulier lorsque ce dernier consiste en un petit modèle de bocal.

Un autre inconvénient de ce type de bocaux une fois stérilisés réside dans le fait que, après une première ouverture, un bocal fermé par un couvercle amovible et séparé, avec joint, ne peut plus être refermé de façon semi étanche pour une consommation décalée, une fois le bocal entamé.

On connait également, dans l'état de la technique, le document américain US 9884716 qui décrit un emballage avec un récipient et un couvercle adapté pour se positionner sur le bord du récipient pour fermer l'ouverture de ce dernier. Le brevet US9884716 décrit essentiellement un procédé de fabrication d'un système de fermeture étanche et stérilisable, comprenant un couvercle, destiné à venir refermer hermétiquement un contenant, et comportant un anneau support de feuille et une feuille de membrane configurée pour être couplée au niveau du chant d'une bague supérieure que comporte le contenant pour établir un joint fluide entre ladite feuille et ledit chant lorsque le couvercle est monté sur ledit contenant. Dans ce procédé sont prévues les étapes suivante : - thermoformage ou moulage de l'anneau support de feuille à partir de matériaux plastiques appropriés comme le polypropylène (PP), ou le polyéthylène haute densité (PEHD), le polyéthylène téréphtalate (PET) ou le polyéthylène téréphtalate cristallisé (CPET), éventuellement coextrudé avec des polymères barrières tels que l'éthylène alcool vinylique (EVOH) ou le polychlorure de vinylidène (PVDC) dans une couche centrale ; - fabrication de la feuille de membrane à partir d'un film ou d'une feuille coextrudée comprenant, par exemple, du PP ou du PEHD et pouvant comporter une ou plusieurs couches barrières telles que de EVOH, du nylon ou du PVDC, des couches de liaison et une couche d'étanchéité, ladite feuille étant flexible et configurée pour se déformer et s'adapter en réponse aux changements de pression du récipient, et étant pelable pour faciliter le détachement du bord du récipient lors du retrait du couvercle du récipient ; - surmoulage dudit anneau support de feuille sur la feuille de membrane pour former le couvercle ou bien collage de façon permanente de la feuille de membrane à l'anneau support de feuille, ledit anneau support de feuille étant par ailleurs configuré pour s'accoupler temporairement en relation de clipsage avec une partie du bord du contenant de sorte que le couvercle soit amovible et refermable. Le brevet US9884716 décrit également un système de fermeture correspondant.

Dans cet emballage, le couvercle et des parties du récipient sont expansibles et aptes à se dilater sans éclater lorsque la pression à l'intérieur du récipient augmente pendant l'exposition dudit emballage à des températures élevées, pour prendre des formes gonflées.

Lors du refroidissement à la sortie du four, à mesure que la pression dans l'emballage diminue, les parties élastiques expansibles de l'emballage se dégonflent et se contractent pour reprendre leur forme initiale.

Dans ce document, la présence d'un joint d'étanchéité n'est pas requise, en sorte que l'emballage peut ne pas être totalement hermétique.

A noter également que, dans cet emballage, le couvercle est formé en deux parties, à savoir un anneau support de feuille, constitué d'un matériau robuste et configuré pour s'accoupler avec le bord supérieur du récipient de l'emballage, et une feuille de membrane en matériau élastique expansible, et couplée en permanence avec l'anneau support de feuille.

La conception en deux parties de ce couvercle est donc de nature à complexifier son assemblage et sa tenue sur le récipient. En outre, une fois que ledit récipient a été ouvert une première fois, par enlèvement de la feuille de membrane et de son anneau support, celle-ci peut très difficilement être refermée, et dans tous les cas pas de manière à assurer une étanchéité suffisante pour une consommation décalée des aliments se trouvant dans le récipient.

La présente invention se veut à même de remédier, au moins en partie, aux inconvénients des emballages de l'état de la technique, en particulier des procédés exclusivement manuels, de pose de joint au niveau d'un couvercle et de pose de l'ensemble couvercle et joint au niveau de la bague du bocal mis en œuvre dans l'état de la technique, en proposant un procédé de fabrication d'un système de fermeture étanche, pasteurisable et stérilisable pour bocaux avec couvercle séparé en un matériau plastique multicouches.

A cet effet, l'invention concerne, plus particulièrement, un procédé de fabrication d'un système de fermeture étanche, pasteurisable et stérilisable comprenant un couvercle et un joint d'étanchéité, destiné à venir refermer hermétiquement un contenant, notamment un bocal en verre, ledit joint d'étanchéité étant positionné au niveau du chant d'une bague supérieure que comporte ledit contenant, ledit procédé étant caractérisé en ce qu'il comporte, au moins, les étapes suivantes, prises dans l'ordre :
- formation, par extrusion, d'un rouleau mère multicouches comportant au moins deux couches de polypropylène (PP) résistant à une température comprise entre 100°C et 150°C, qui encadrent une couche barrière centrale d'éthylène alcool vinylique (EVOH), ledit rouleau mère multicouches étant apte au contact alimentaire ;
- thermoformage et découpe, à partir dudit rouleau mère multicouches, du couvercle, au moyen de moules de formage, en sorte que ledit couvercle obtenu comporte, au moins, au niveau de sa face inférieure, une rainure circulaire constituant un logement pour le joint d'étanchéité destiné à venir en contact avec le chant de la bague supérieure du contenant, une portion centrale dudit couvercle formant un dôme convexe relevé vers l'extérieur avant mise sous vide et apte à se rétracter pour devenir concave lors de la mise sous vide, tandis qu'une gorge circulaire entourant le dôme convexe, est ménagée au niveau de la face supérieure du couvercle, ce dernier étant par ailleurs muni sur l'ensemble de son pourtour d'un rebord de fermeture comportant une pluralité de moyens d'encliquetage aptes à coopérer avec ladite bague supérieure dudit contenant ;
- dépose dudit joint d'étanchéité dans la rainure circulaire de la face inférieure du couvercle pour obtenir ledit système de fermeture étanche, pasteurisable et stérilisable ;
- éventuellement, refroidissement dudit système de fermeture étanche, pasteurisable et stérilisable.

Selon des exemples de réalisation du procédé :
- ledit joint d'étanchéité est un joint préformé.
- ledit joint d'étanchéité est déposé sous forme liquide ou pâteuse dans ladite rainure circulaire, avant une phase de polymérisation.

Dans une variante de réalisation du procédé de l'invention, dans la première étape de celui-ci, il y a formation, par extrusion, d'un rouleau mère multicouches PP-EVOH-PP- polymère souple, la couche de polymère souple constituant le joint d'étanchéité dans la rainure circulaire.

Selon des exemples de réalisation du procédé, aussi bien lorsque le joint d'étanchéité est déposé dans la rainure circulaire, que lorsque celui-ci est directement intégré au rouleau mère multicouches :
- la couche de polypropylène comporte des pigments de couleur.
- la couche barrière EVOH présente une épaisseur comprise entre 10 µm à 10% de l'épaisseur totale du rouleau mère multicouches.
- ledit couvercle obtenu par thermoformage comporte également une languette d'ouverture.
- ledit couvercle obtenu par thermoformage comporte également un pourtour de finition conique formant un évasement au niveau de la face supérieure du couvercle.

L'invention concerne, également un système de fermeture étanche, pasteurisable et stérilisable susceptible d'être obtenu au moyen du procédé de fabrication conforme à l'invention.

Celui-ci comporte un couvercle et un joint d'étanchéité, destiné à venir refermer hermétiquement un contenant, notamment un bocal en verre, ledit joint d'étanchéité étant alors positionné au niveau du chant d'une bague supérieure que comporte ledit contenant, ledit système de fermeture étant caractérisé en ce que ledit couvercle est fabriqué en matériau plastique multicouches apte au contact alimentaire et comprenant au moins deux couches de polypropylène (PP) résistant à une température comprise entre 100°C et 150°C et encadrant une couche barrière d'éthylène alcool vinylique (EVOH), ledit couvercle comportant au moins, au niveau de sa face inférieure, une rainure circulaire constituant le logement dans lequel est placé le joint d'étanchéité, une portion centrale dudit couvercle formant un dôme convexe relevé vers l'extérieur avant mise sous vide et apte à se rétracter pour devenir concave lors de la mise sous vide, tandis qu'une gorge circulaire entourant le dôme convexe, est ménagée au niveau de la face supérieure du couvercle, ce dernier étant par ailleurs muni, sur l'ensemble de son pourtour, d'un rebord de fermeture sous la forme d'une jupe comportant une pluralité des moyens d'encliquetage aptes à coopérer avec ladite bague supérieure dudit contenant.

Préférentiellement, le système de fermeture présente les caractéristiques additionnelles suivantes :
- il est muni d'un pourtour de finition conique formant au niveau de la face supérieure du couvercle, à la base du couvercle thermoformé, pour une coopération avec la surface extérieure de la rainure circulaire d'un second système de fermeture lors de leur empilement.
- ledit couvercle comporte une languette d'ouverture latérale ;
- lesdits moyens d'encliquetage du couvercle aptes à coopérer avec la bague supérieure du contenant consistent en une gorge de clipsage parcourant la quasi-totalité du périmètre du rebord de fermeture sous la forme d'une jupe, à l'exception d'une pluralité de portions régulièrement réparties sur ledit périmètre au niveau desquelles sont ménagées un raidisseur ;
- lesdits moyens d'encliquetage du couvercle consistent en une pluralité d'encoches intérieures de fermeture, réparties régulièrement sur l'ensemble du pourtour de ladite jupe.
- ledit joint d'étanchéité est un joint préformé en un élastomère thermoplastique, le TPS-SEBS.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :

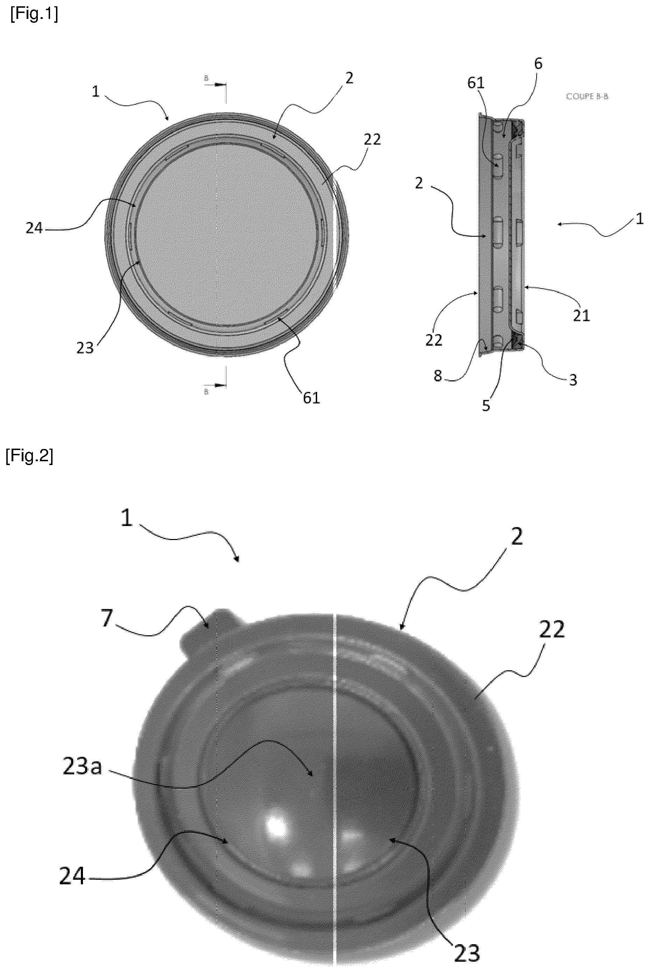

[Fig.1] représente une vue schématisée de dessus (à gauche) et selon la coupe B-B (à droite) d'un mode de réalisation d'un système de fermeture étanche, pasteurisable et stérilisable, susceptible d'être obtenu au moyen de la mise en œuvre du procédé de fabrication conforme à la présente invention, destiné à venir refermer de manière étanche un contenant, type bocal en verre, comprenant un couvercle et un joint d'étanchéité inséré dans une rainure circulaire que comporte la face inférieure dudit couvercle, ledit joint étant destiné à venir au contact avec le chant d'une bague supérieure que comporte le bocal en verre pour le fermer hermétiquement après mise sous vide.
[Fig.2] représente une photographie de dessus d'un système de fermeture étanche, pasteurisable et stérilisable susceptible d'être obtenu selon le procédé de fabrication de l'invention, et comprenant, latéralement, une languette d'ouverture, et dont la portion centrale du couvercle présente la forme d'un dôme convexe relevé vers l'extérieur, par rapport au contenant, avant mise sous vide de ce dernier.

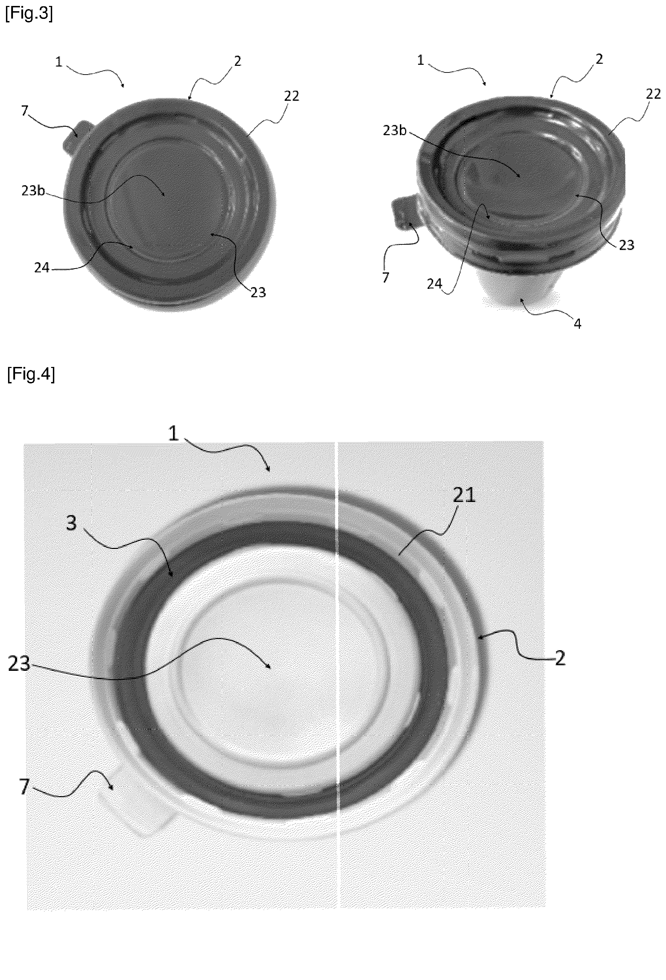

[Fig.3] représente une photographie de dessus du système de fermeture étanche, pasteurisable et stérilisable similaire à celui de la figure 2, après mise sous vide du contenant, la portion centrale du couvercle sous la forme d'un dôme convexe relevé vers l'extérieur avant la mise sous vide s'étant rétractée vers l'intérieur pour devenir concave lors de la mise sous vide.
[Fig.4] représente une photographie de la face inférieure du couvercle, avec le joint disposé dans la rainure circulaire pour former le système de fermeture de l'invention.

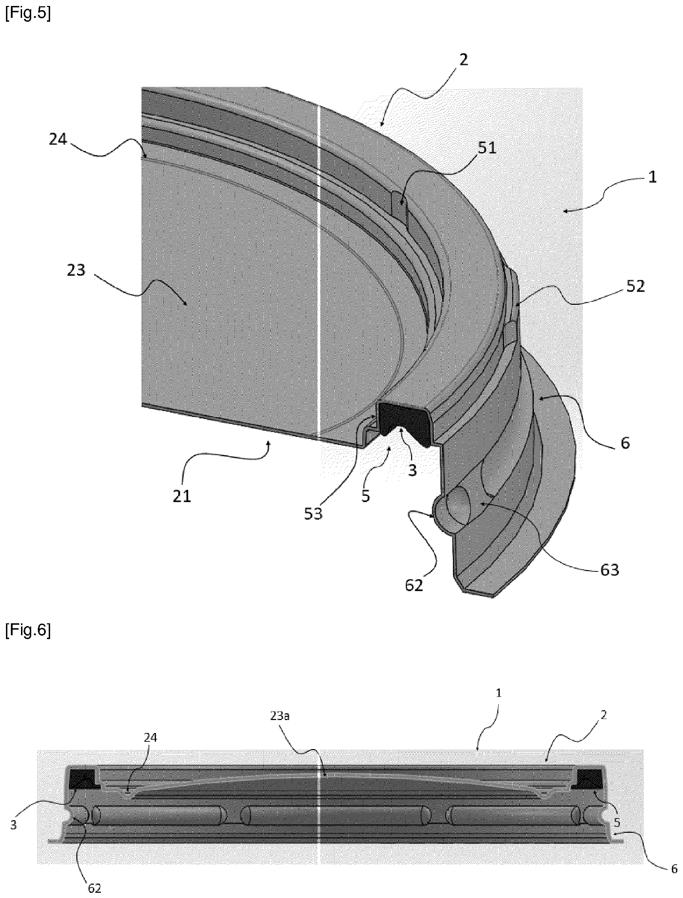

[Fig.5] représente une vue schématisée et agrandie, selon une coupe diamétrale, d'une partie du couvercle, permettant d'illustrer un mode de réalisation particulier de celui-ci, avec notamment une pluralité de bossages rentrant, ou internes, vers l'intérieur par rapport à la rainure circulaire dans laquelle est insérée le joint d'étanchéité, également représenté sur cette figure, lesdits bossages rentrant étant positionnés en alternance avec des bossages sortant, ou externes, pour faciliter l'empilement des couvercles les uns sur les autres.
[Fig.6] représente une autre vue schématisée en coupe partielle, du mode de réalisation illustré sur la figure 5, et sur laquelle est également visible la portion centrale du couvercle sous la forme d'un dôme convexe relevé vers l'extérieur, par rapport au contenant, avant mise sous vide de ce dernier.

En référence aux figures des dessins ci-joints, la présente invention concerne, plus particulièrement, un procédé de fabrication d'un système de fermeture étanche, pasteurisable et stérilisable 1.

Ce système 1 est destiné à venir refermer le bord d'un contenant 4, type bocal, notamment fabriqué en verre, ou en un matériau plastique, avant conservation sous vide, pasteurisation ou stérilisation de l'ensemble constitué par ledit contenant 4 associé à son système de fermeture 1, ledit contenant 4 ayant été au préalable rempli en partie d'un produit alimentaire que l'on souhaite conserver.

Un tel système de fermeture étanche, pasteurisable et stérilisable 1 comporte, essentiellement, un couvercle 2, ainsi qu'un joint d'étanchéité 3 positionné au niveau de la face inférieure 21 dudit couvercle 2, autrement dit la face 21 destinée à venir au contact du bord du contenant 4.

Plus spécifiquement, au moment du positionnement du système de fermeture 1 sur le contenant 4 pour refermer celui-ci, ledit joint d'étanchéité 3 vient au contact du chant d'une bague supérieure, ou rebord supérieur, non visible sur les figures, pour permettre une fermeture hermétique du contenant 4 par la mise sous vide avant pasteurisation ou stérilisation de l'ensemble.

Dans une première étape du procédé de fabrication d'un système de fermeture 1 conforme à l'invention, on forme, par extrusion, un rouleau mère multicouches.

Ce rouleau mère comporte ainsi, au moins, deux couches de polypropylène (PP) prenant en sandwich une « couche barrière » fabriquée en éthylène alcool vinylique (EVOH).

Le PP utilisé pour les deux couches externes du rouleau mère multicouches consiste en un PP dit « haute température », c'est à dire capable de résister à des températures d'au moins 125°C lors d'un traitement thermique, et jusqu'à 150°C maximum à court terme, selon les contraintes techniques.

La couche barrière en EVOH encadrée par lesdites deux couches externes de PP haute température présente une épaisseur comprise entre 10µm et 10% de l'épaisseur totale du film PP-EVOH-PP.

Le rouleau multicouches est formé par extrusion et lors de ce process, les deux matières PP et EVOH vont se superposer et se lier ensemble lors du refroidissement.

Les épaisseurs de PP peuvent varier selon les contraintes techniques du contenant 4, en particulier selon le diamètre de ce dernier.

A noter qu'il est indispensable que le matériau multicouches, constitué de PP et d'EVOH, soit apte au contact alimentaire, de même que le matériau dans lequel est fabriqué le joint d'étanchéité 3, ce dernier pouvant être notamment, en silicone, en caoutchouc, ou tout autre matériau adapté à cet effet.

Plus préférentiellement encore, le joint d'étanchéité est un joint injecté et consiste en un élastomère thermoplastique, le TPS-SEBS, autrement dit du thermoplastique styrène (TPS) à base de de styrène-éthylène-butylène-styrène (SEBS).

Dans un exemple de réalisation avantageux du procédé de l'invention, la couche de polypropylène extrudée lors de la première étape du procédé, pour la formation du rouleau multicouches, peut comporter des pigments de couleur.

En effet, de manière avantageuse, au moyen du procédé de fabrication de systèmes de fermeture 1 de l'invention, ce dernier peut être personnalisé, le couvercle 2 pouvant ainsi présenter différentes couleurs ou des logos.

Tout préférentiellement, la couche barrière centrale EVOH du rouleau multicouches obtenu suite à la première étape du procédé de fabrication de l'invention présente une épaisseur comprise entre 10µm et 10% de l'épaisseur totale du film, cette épaisseur de la couche barrière EVOH étant, encore plus préférentiellement, de l'ordre de, ou égale à, 80 µm.

L'épaisseur de la couche barrière EVOH peut cependant être variable selon les contraintes techniques du contenant.

Une deuxième étape du procédé de fabrication de l'invention consiste en un thermoformage de l'élément et une découpe, au moyen d'un moule de formage, pour obtenir le couvercle 2 en fin de process.

A noter que cette opération de thermoformage est effectuée au moyen du moule de telle sorte à ce que ledit couvercle 2 finalement obtenu comporte, au moins, au niveau de sa face inférieure 21, une rainure circulaire 5 constituant un logement pour ledit joint d'étanchéité 3 qui est destiné à venir en contact avec le chant de la bague supérieure du contenant 4 au moment de la fermeture de ce dernier par le système 1.

En outre, une portion circulaire centrale 23 dudit couvercle 2 forme, après thermoformage, un dôme convexe 23a relevé vers l'extérieur, par rapport au contenant 4 une fois le système de fermeture 1 positionné sur la partie ouverte de celui-ci, avant mise sous vide de l'ensemble constitué par le contenant 4 et le système de fermeture 1 de ce dernier.

Ladite portion centrale circulaire 23 sous forme de dôme convexe 23a est en outre apte à se rétracter pour devenir concave 23b lors de la mise sous vide du contenant 4, notamment par traitement thermique de l'ensemble.

Une gorge circulaire 24 entourant le dôme convexe 23a, au niveau de la face supérieure 22 du couvercle 2, permet de limiter la déformation de celui-ci sous l'action du vide à la seule portion de ce dôme 23a.

Ceci évite la formation de plis dans la zone périphérique du couvercle 2, notamment dans la zone de coopération dudit couvercle 2 avec le joint d'étanchéité 3.

En effet, la présence de plis dans la rainure circulaire 5 constituant le logement du joint d'étanchéité 3 aurait pour effet de permettre une circulation d'air entre l'intérieur et l'extérieur du contenant fermé et, par conséquent, une perte de vide.

A noter encore que l'opération de thermoformage doit permettre d'obtenir un couvercle 2 dont le rebord de fermeture 6, se présentant sous la forme d'une jupe destinée à venir recouvrir et coopérer avec la bague supérieure du contenant 4, comporte, des moyens d'encliquetage dudit couvercle 2 sur ladite bague supérieure dudit contenant, par exemple sous la forme d'une pluralité d'encoches intérieures de fermeture 61, réparties régulièrement sur l'ensemble du pourtour de ladite jupe.

Sur l'exemple de réalisation illustré sur la figure 1 des dessins ci joints, six encoches de fermeture 61 sont représentées. Cela étant, un tel mode de réalisation ne doit pas être considéré comme étant limitatif, et un nombre différent de six encoches de fermeture 61 peut être envisagé, notamment dix encoches de fermetures peuvent être réparties régulièrement sur l'ensemble du pourtour du rebord de fermeture 6.

De telles encoches intérieures de fermeture 61, permettent, une fois que le système de fermeture 1 a été retiré du contenant 4 pour une première consommation d'une partie du produit alimentaire se trouvant à l'intérieur de celui-ci, de repositionner ledit système de fermeture 1 de façon partiellement étanche, par clipsage.

En effet, l'étanchéité après première ouverture, permise par la présence des encoches 61 au moment de refermer le bocal 4 a été estimée à environ 90%, par rapport à une étanchéité totale après mise sous vide, constituant une étanchéité particulièrement intéressante pour ce type de produits.

Dans un autre exemple de réalisation particulièrement préférentiel, illustré sur la figure 5 et 6 des dessins ci-joints, lesdits moyens d'encliquetage dudit couvercle 2 sur la bague supérieure d'un contenant 4 se présentent sous la forme d'une gorge de clipsage 62 parcourant la quasi-totalité du périmètre du rebord de fermeture 6 sous la forme d'une jupe, à l'exception de portions du périmètre au niveau desquelles sont ménagées des raidisseurs 63.

Ainsi, l'action des moyens d'encliquetage est maximisée en sorte d'augmenter le maintien et la tenue du couvercle 2, en particulier lors de la mise sous vide.

La présence des raidisseurs 63 répartis régulièrement sur le pourtour du périmètre de la jupe permettent une conformation de la gorge de clipsage 62 pour que, sous l'effet de la pression et de la température, celle-ci conserve sa géométrie.

Tout préférentiellement, et comme illustré sur les figures 2, 3 et 4, l'étape de thermoformage permet l'obtention d'une languette d'ouverture 7 latérale au niveau du couvercle 2, facilitant la première ouverture et la mise à l'air du contenant 4 pour permettre la consommation du produit alimentaire s'y trouvant.

Suite à l'étape de thermoformage et à l'obtention du couvercle 2, l'étape suivante du procédé de fabrication conforme à l'invention consiste en une dépose du joint d'étanchéité 3 dans la rainure circulaire 5 réservée au niveau de la face inférieure 21 du couvercle 2.

Deux types de joints 3 peuvent être déposés dans la rainure circulaire 5.

Dans un premier exemple, particulièrement préférentiel, un joint d'étanchéité 3 préformé et prêt à l'emploi peut être déposé, soit mécaniquement, soit manuellement dans ladite rainure 5.

Le joint d'étanchéité 3 peut être ici obtenu par injection d'une matière souple (notamment silicone) ou découpé dans des feuilles/plaques de silicone ou caoutchouc (notamment naturel).

Dans ce cas de figure, le joint d'étanchéité 3 est solidarisé au couvercle 2 au moyen d'une pluralité de micro-crochets, sous la forme de contre dépouilles dans la rainure circulaire 5.

Dans un tel exemple de réalisation, tout préférentiellement, et comme déjà évoqué, le joint obtenu par injection qui est inséré dans la rainure 5 est en une matière élastomère thermoplastique, le TPS-SEBS.

En référence à présent à la figure 5 annexée, lorsque le joint d'étanchéité injecté est inséré dans la rainure 5, et en particulier lorsqu'il s'agit d'un joint en TPS-SEBS, ladite rainure 5 est munie d'une pluralité de bossages rentrant 51, ou internes, vers l'intérieur par rapport à la rainure circulaire 5 dans laquelle est insérée le joint d'étanchéité 3.

Les bossages rentrant 51 permettent de coincer le joint d'étanchéité 3 dans son logement, à savoir la rainure 5, afin de permettre une manipulation du couvercle 2 prémonté, avec ledit joint 3 injecté positionné dans la rainure 5 du couvercle 2, prêt à être utilisé pour refermer un contenant 4.

Lesdits bossages rentrant 51 peuvent être positionnés en alternance avec des bossages sortant 52, ou externes, ces derniers ayant pour effet de faciliter l'empilement des couvercles les uns sur les autres.

Les bossages extérieurs 52 ont, quant à eux, pour effet, de permettre aux couvercles 2 de s'empiler correctement les uns sur les autres, en termes d'appui et de centrage, de façon à pourvoir être conditionnés en pile, à pouvoir être utilisés dans des machines de dépilage automatique pour permettre une dépose automatique du joint 3 dans la rainure 5 du couvercle 2 ou du couvercle 2 équipé de son joint 3 sur un bocal 4, notamment en verre.

Tout préférentiellement, sans que cela ne soit toutefois limitatif, le pourtour de la rainure 5 destinée à contenir ledit joint d'étanchéité 3 est muni, répartis de manière alternative et régulière, de huit bossages rentrant 51 et huit bossages sortant 52.

A noter encore que, de manière avantageuse, toujours en référence à la figure 5, la face intérieure 53 du logement du joint 3 dans le couvercle 2, à savoir la face intérieure de la rainure 5, est verticale, à l'exception de la pluralité de bossages rentrant 51 en sorte de maintenir ledit joint 3 en place lors de la mise sous vide du bocal 4 fermé, notamment en verre.

Dans un autre exemple de réalisation, il peut s'agir d'un joint d'étanchéité 3 déposé sous forme liquide ou pâteuse dans ladite rainure 5, qui nécessitera une conformation pour que la face du joint 5 devant coopérer avec le bord du contenant 4 soit géométriquement apte à cette coopération, puis une phase de polymérisation, qui dépendra du polymère, ce dernier pouvant notamment consister en du silicone.

La polymérisation permet le changement d'état du joint d'étanchéité 3.

En effet, au cours de cette étape, ledit joint 3 passe d'une phase visqueuse à une phase élastique.

Selon le matériau du joint, une telle polymérisation est effectuée soit par température, soit par réaction chimique entre deux composants, ou bien encore par réticulation, dans le cas de caoutchouc.

Dans une variante de réalisation du procédé de fabrication de l'invention, on procède à une extrusion d'un film multicouche PP-EVOH-PP-polymère souple. Le thermoformage, puis la découpe permettent alors d'obtenir une pièce directement dotée de la fonction étanchéité, la couche de polymère souple constituant ici le joint d'étanchéité 3.

On obtient ainsi ledit système de fermeture étanche, pasteurisable et stérilisable 1 constitué du couvercle 2 et dudit joint d'étanchéité 3.

De manière particulièrement avantageuse, grâce au procédé de fabrication d'un système de fermeture 1 pour contenant 4 destiné à conserver des aliments, l'étape de dépose du joint d'étanchéité 3 au niveau de la face inférieure 21 du couvercle 2 peut être effectuée de manière entièrement automatisée.

On supprime ainsi la nécessité de recourir à de la main d'œuvre spécifiquement pour cette étape-là, contrairement à ce qui est effectué actuellement dans l'état de la technique, pour obtenir des bocaux en verre contenant des aliments prêts à être conservés sous vide ou traités thermiquement.

Lors de l'étape finale du procédé de fabrication du système de fermeture étanche, pasteurisable et stérilisable 1 de l'invention, notamment suite à la polymérisation, on procède à un refroidissement dudit système 1.

Les systèmes de fermeture 1 de bocaux 4 ainsi fabriqués peuvent, ainsi, de manière avantageuse, être empilés dans une étape ultérieure et optionnelle, pour une utilisation avec des dépileurs automatisés, pour refermer automatiquement des contenants 4 remplis de produits alimentaires.

Ainsi, le procédé de l'invention est particulièrement intéressant pour un développement de l'industrialisation de produits alimentaires contenus dans des bocaux 4, notamment en verre, refermés de manière étanche avant mise sous vide de ces derniers, pour une conservation optimale dans des conditions aseptiques desdits produits.

En effet, d'une part, le procédé de l'invention supprime l'étape existante actuellement de pose manuelle du joint au niveau de la face inférieure du couvercle, de même que la pose et la dépose des clips pour maintenir l'ensemble joint et couvercle sur le bocal.

La fabrication de système de fermeture 1 par le procédé de l'invention autorise une automatisation complète du cycle de fermeture des contenants 4, au moyen de machines existantes, à modifier éventuellement.

Les systèmes de fermeture 1 ainsi obtenus peuvent en outre être utilisés avec des machines à vide conventionnelles à cloche, tandis qu'une pose manuelle du couvercle reste également réalisable pour une mise sous vide.

Les systèmes de fermeture étanches, pasteurisables et stérilisables 1 peuvent être fabriqués de telle sorte à pouvoir être adaptés à différents types de bocaux 4, notamment différentes tailles, sans modification de ces derniers.

Les couvercles 2 peuvent en outre être personnalisés aisément, par ajout du logo de l'industriel et/ou par personnalisation de la couleur de la gaine mère en polypropylène.

Après une première ouverture, un contenant 4 peut être refermé par le système de fermeture 1 obtenu par la mise en œuvre du procédé de l'invention, avec une étanchéité satisfaisante pour une telle opération de nouvelle fermeture et une conservation à court terme.

La fabrication de tels systèmes de fermeture 1, à base de matériaux plastiques, qui sont par ailleurs recyclables, permet une réduction du poids de l'ensemble bocal et couvercle, en comparaison avec les ensembles existants intégralement en verre.

Ainsi, le procédé de l'invention permet l'obtention de systèmes de fermeture 1 permettant une obturation optimale et esthétique du bord d'un contenant 4.

A noter que de tels systèmes 1 sont utilisables aussi bien pour une simple mise sous vide des bocaux sans traitement thermique, avec les avantages de la mise sous vide, que pour une pasteurisation, avec une conservation à moyen terme en respectant la chaîne du froid, ou bien encore pour une stérilisation des bocaux 4 avec conservation à température ambiante à long terme.

La présente invention concerne alors, également, un système de fermeture étanche, pasteurisable et stérilisable 1 susceptible d'être obtenu par la mise en œuvre du procédé de fabrication tel que décrit ci-dessus.

Selon l'invention un tel système de fermeture 1 comporte, d'une part, un couvercle 2 et, d'autre part, un joint d'étanchéité 3, destiné à venir refermer hermétiquement un contenant 4, type bocal en verre ou en matière plastique, ledit joint d'étanchéité 3 étant intimement associé au couvercle 2.

Selon une caractéristique de la présente invention, ledit couvercle 2 est fabriqué en un matériau plastique multicouches, apte au contact alimentaire, et comprenant au moins deux couches de PP haute température encadrant une couche barrière EVOH d'une épaisseur variable selon les contraintes techniques.

Ledit couvercle 2 présente au moins, au niveau de sa face inférieure 21, destinée à venir au contact du bord du contenant 4, une rainure circulaire 5 constituant le logement dans lequel est placé le joint d'étanchéité 3.

De manière essentielle, une portion centrale circulaire 23 dudit couvercle 2 forme un dôme convexe 23a, relevé vers l'extérieur, par rapport au contenant 4, avant mise sous vide et apte à se rétracter pour devenir concave 23b, vers l'intérieur dudit contenant 4, une fois la mise sous vide effectuée.

Une telle caractéristique, à savoir le passage de la portion centrale circulaire 23 du couvercle 2 depuis une forme convexe vers une forme concave permet un contrôle visuel de la mise sous vide du contenant 4, ainsi qu'un suivi du maintien du vide, par analyse de la déformation.

Une gorge circulaire 24 qui entoure cette portion centrale circulaire 23, apte à passer d'une forme convexe 23a à concave 23b, est ménagée au niveau de la face supérieure 22 du couvercle 2.

Le couvercle 2 du système de fermeture 1 est par ailleurs muni, sur l'ensemble de son pourtour, d'un rebord de fermeture 6, sous la forme d'une jupe destinée à venir recouvrir la bague supérieure du contenant, et comportant une pluralité d'encoches de fermeture 61 aptes à coopérer avec cette bague pour une obturation optimale de celui-ci après la première ouverture.

Tout préférentiellement, et comme visible notamment sur la figure 1, le couvercle thermoformé 2 comporte également, au niveau de sa face externe 22, un pourtour de finition conique 8 à la base du couvercle 2 thermoformé, ce pourtour conique 8 formant un évasement, en sorte de permettre la coopération d'un premier système de fermeture 1 avec la surface extérieure de la rainure circulaire 5 d'un second système de fermeture 1 similaire, pour garantir un empilement stable de ces systèmes de fermeture 1, avant leur mise en place sur le bord du contenant 4.

Au moyen de cette caractéristique, il est envisageable de travailler la dépose de systèmes de fermeture 1 de manière automatisée, en pile, pour de futurs chargeurs ou dépileurs.

A noter que les caractéristiques qui ont été décrites dans la présente demande en lien avec le procédé de fabrication des systèmes de fermeture 1 sont applicables aux systèmes de fermeture 1, susceptibles d'être obtenus au moyen du présent procédé, ou par un autre procédé, et inversement.

## Revendications

1. Procédé de fabrication d'un système de fermeture étanche, pasteurisable et stérilisable (1), comprenant un couvercle (2) et un joint d'étanchéité (3), destiné à venir refermer hermétiquement un contenant (4), notamment un bocal en verre, ledit joint d'étanchéité (3) étant positionné au niveau du chant d'une bague supérieure que comporte ledit contenant (4), ledit procédé étant **caractérisé en ce qu'**il comporte, au moins, les étapes suivantes, prises dans l'ordre :
- formation, par extrusion, d'un rouleau mère multicouches comportant au moins deux couches de polypropylène (PP) résistant à une température comprise entre 100°C et 150°C, qui encadrent une couche barrière centrale d'éthylène alcool vinylique (EVOH), ledit rouleau mère multicouches étant apte au contact alimentaire ;
- thermoformage et découpe, à partir dudit rouleau mère multicouches, du couvercle (2), au moyen de moules de formage, en sorte que ledit couvercle (2) obtenu comporte, au moins, au niveau de sa face inférieure (21), une rainure circulaire (5) constituant un logement pour le joint d'étanchéité (3) destiné à venir en contact avec le chant de la bague supérieure du contenant (4), une portion centrale (23) dudit couvercle (2) formant un dôme convexe (23a) relevé vers l'extérieur avant mise sous vide et apte à se rétracter pour devenir concave (23b) lors de la mise sous vide, tandis qu'une gorge circulaire (24) entourant le dôme convexe (23a), est ménagée au niveau de la face supérieure (22) du couvercle (2), ce dernier étant par ailleurs muni sur l'ensemble de son pourtour d'un rebord de fermeture (6) comportant des moyens d'encliquetage (61, 62) aptes à coopérer avec ladite bague supérieure dudit contenant (4) ;
- dépose dudit joint d'étanchéité (3) dans la rainure circulaire (5) de la face inférieure du couvercle pour obtenir ledit système de fermeture étanche, pasteurisable et stérilisable (1) ;
- éventuellement, refroidissement dudit système de fermeture étanche, pasteurisable et stérilisable (1).

2. Procédé de fabrication d'un système de fermeture étanche, pasteurisable et stérilisable (1) selon la revendication 1 **caractérisé en ce que** ledit joint d'étanchéité (3) est un joint préformé.

3. Procédé de fabrication d'un système de fermeture étanche, pasteurisable et stérilisable (1) selon la revendication 2 **caractérisé en ce que** ledit joint d'étanchéité (3) préformé est en un élastomère thermoplastique, le TPS-SEBS.

4. Procédé de fabrication d'un système de fermeture étanche, pasteurisable et stérilisable (1) selon la revendication 1 **caractérisé en ce que** ledit joint d'étanchéité (3) est déposé sous forme liquide ou pâteuse dans ladite rainure circulaire (5), avant une phase de polymérisation.

5. Procédé de fabrication d'un système de fermeture étanche, pasteurisable et stérilisable (1), comprenant un couvercle (2) et un joint d'étanchéité (3), destiné à venir refermer hermétiquement un contenant (4), notamment un bocal en verre, ledit joint d'étanchéité (3) étant positionné au niveau du chant d'une bague supérieure que comporte ledit contenant (4), ledit procédé étant **caractérisé en ce qu'**il comporte, au moins, les étapes suivantes, prises dans l'ordre :
- formation, par extrusion, d'un rouleau mère multicouches comportant au moins deux couches de polypropylène (PP) résistant à une température comprise entre 100°C et 150°C, qui encadrent une couche barrière centrale d'éthylène alcool vinylique (EVOH), et une couche de polymère souple constituant ledit joint d'étanchéité, ledit rouleau mère multicouches étant apte au contact alimentaire ;
- thermoformage et découpe, à partir dudit rouleau mère multicouches, du couvercle (2), au moyen de moules de formage, en sorte que ledit couvercle (2) obtenu comporte, au moins, au niveau de sa face inférieure (21), une rainure circulaire (5) constituant un logement pour le joint d'étanchéité (3) constitué par la couche de polymère souple du rouleau multicouches, ledit joint (3) étant destiné à venir en contact avec le chant de la bague supérieure du contenant (4), une portion centrale (23) dudit couvercle (2) formant un dôme convexe (23a) relevé vers l'extérieur avant mise sous vide et apte à se rétracter pour devenir concave (23b) lors de la mise sous vide, tandis qu'une gorge circulaire (24) entourant le dôme convexe (23a), est ménagée au niveau de la face supérieure (22) du couvercle (2), ce dernier étant par ailleurs muni sur l'ensemble de son pourtour d'un rebord de fermeture (6) comportant des moyens d'encliquetage (61, 62) aptes à coopérer avec ladite bague supérieure dudit contenant (4) ;
- éventuellement, refroidissement dudit système de fermeture étanche, pasteurisable et stérilisable (1).

6. Procédé de fabrication d'un système de fermeture étanche, pasteurisable et stérilisable (1) selon l'une quelconque des revendications précédentes **caractérisé en ce que** la couche de polypropylène est personnalisable et comporte des pigments de couleur.

7. Procédé de fabrication d'un système de fermeture étanche, pasteurisable et stérilisable (1) selon l'une quelconque des revendications précédentes **caractérisé en ce que** la couche barrière EVOH présente une épaisseur comprise entre 10 µm à 10% de l'épaisseur totale du rouleau mère multicouches.

8. Procédé de fabrication d'un système de fermeture étanche, pasteurisable et stérilisable (1) selon l'une quelconque des revendications précédentes **caractérisé en ce que** ledit couvercle (2) obtenu par thermoformage comporte également une languette d'ouverture (7).

9. Procédé de fabrication d'un système de fermeture étanche, pasteurisable et stérilisable (1) selon l'une quelconque des revendications précédentes **caractérisé en ce que** ledit couvercle (2) obtenu par thermoformage comporte également pourtour de finition conique (8) formant un évasement au niveau de la face supérieure (22) du couvercle (2).

10. Système de fermeture étanche, pasteurisable et stérilisable (1) susceptible d'être obtenu par la mise en œuvre du procédé de fabrication selon l'une quelconque des revendications précédentes, comportant un couvercle (2) et un joint d'étanchéité (3), destiné à venir refermer hermétiquement un contenant (4), notamment un bocal en verre, ledit joint d'étanchéité (3) étant alors positionné au niveau du chant d'une bague supérieure que comporte ledit contenant (4), ledit système de fermeture (1) étant **caractérisé en ce que** ledit couvercle (2) est fabriqué en matériau plastique multicouches apte au contact alimentaire et comprenant au moins deux couches de polypropylène (PP) résistant à une température comprise entre 100°C et 150°C et encadrant une couche barrière d'éthylène alcool vinylique (EVOH), ledit couvercle (2) comportant au moins, au niveau de sa face inférieure (21), une rainure circulaire (5) constituant le logement dans lequel est placé le joint d'étanchéité (3), une portion centrale (23) dudit couvercle (2) formant un dôme convexe (23a) relevé vers l'extérieur avant mise sous vide et apte à se rétracter pour devenir concave (23b) lors de la mise sous vide, tandis qu'une gorge circulaire (24) entourant le dôme convexe (23a), est ménagée au niveau de la face supérieure (22) du couvercle (2), ce dernier étant par ailleurs muni, sur l'ensemble de son pourtour, d'un rebord de fermeture (6) sous la forme d'une jupe comportant des moyens d'encliquetage (61, 62) aptes à coopérer avec ladite bague supérieure dudit contenant (4).

11. Système de fermeture étanche, pasteurisable et stérilisable (1) selon la revendication précédente **caractérisé en ce qu'**il est muni d'un pourtour de finition conique (8) formant au niveau de la face supérieure (22) du couvercle (2), à la base du couvercle (2) thermoformé, pour une coopération avec la surface extérieure de la rainure circulaire (5) d'un second système de fermeture (1) lors de leur empilement.

12. Système de fermeture étanche, pasteurisable et stérilisable (1) selon la revendication 10 ou la revendication 11 **caractérisé en ce que** ledit couvercle (2) comporte une languette d'ouverture (7) latérale

13. Système de fermeture étanche, pasteurisable et stérilisable (1) selon l'une quelconque des revendications 10 à 12 **caractérisé en ce que** lesdits moyens d'encliquetage du couvercle (2) aptes à coopérer avec la bague supérieure du contenant (4) consistent en une gorge de clipsage (62) parcourant la quasi-totalité du périmètre du rebord de fermeture (6) sous la forme d'une jupe, à l'exception d'une pluralité de portions régulièrement réparties sur ledit périmètre au niveau desquelles sont ménagées un raidisseur (63).

14. Système de fermeture étanche, pasteurisable et stérilisable (1) selon l'une quelconque des revendications 10 à 12 **caractérisé en ce que** lesdits moyens d'encliquetage du couvercle (2) aptes à coopérer avec la bague supérieure du contenant (4) consistent en une pluralité d'encoches intérieures de fermeture (61), réparties régulièrement sur l'ensemble du pourtour de ladite jupe.

15. Système de fermeture étanche, pasteurisable et stérilisable (1) selon l'une quelconque des revendications 10 à 14 **caractérisé en ce que** ledit joint d'étanchéité (3) est un joint préformé en un élastomère thermoplastique, le TPS-SEBS.

## Patentansprüche

1. Verfahren zum Herstellen eines dichten, pasteurisierbaren und sterilisierbaren Verschlusssystems (1), umfassend einen Deckel (2) und eine Dichtung (3), welche dazu vorgesehen ist, hermetisch einen Behälter (4) zu verschließen, insbesondere ein Glasgefäß, wobei die Dichtung (3) auf dem Niveau der Kante eines oberen Rands positioniert ist, welchen der Behälter (4) aufweist, wobei das Verfahren **dadurch gekennzeichnet ist, dass** es wenigstens die folgenden Schritte in dieser Reihenfolge genommen umfasst:
- Bilden durch Extrusion einer mehrschichtigen Mutterrolle, welche wenigstens zwei Schichten von Polypropylen (PP) umfasst, welche beständig gegenüber einer Temperatur von zwischen 100°C und 150°C sind, welche eine zentrale Barriereschicht aus Ethylen-Vinylalkohol (EVOH) umschließen, wobei die mehrschichtige Mutterrolle für den Kontakt mit Lebensmitteln geeignet ist;
- Thermoformen und Schneiden, ausgehend von der mehrschichtigen Mutterrolle, des Deckels (2) mittels Formwerkzeugen, so dass der erhaltene Deckel (2) wenigstens auf dem Niveau seiner unteren Fläche (21) eine kreisförmige Nut (5) umfasst, welche eine Aufnahme für die Dichtung (3) bildet, welche dazu vorgesehen ist, in Kontakt mit der Kante des oberen Rands des Behälters (4) zu kommen, wobei ein zentraler Abschnitt (23) des Deckels (2) eine konvexe Kuppel (23a) bildet, welche sich vor einem Vakuumieren nach außen erhebt und in der Lage ist, sich während des Vakuumierens zurückzuziehen, um konkav (23b) zu werden, während ein die konvexe Kuppel (23a) umgebender kreisförmiger Hals (24) auf dem Niveau der oberen Fläche (22) des Deckels (2) vorgesehen ist, wobei letzterer andererseits an seinem gesamten Umfang mit einem Verschlussrand (6) versehen ist, welcher Schnappmittel (61, 62) umfasst, welche dazu in der Lage sind, mit dem oberen Rand des Behälters (4) zusammenzuwirken;
- Einlegen der Dichtung (3) in die kreisförmige Nut (5) der unteren Fläche des Deckels, um das dichte, pasteurisierbare und sterilisierbare Verschlusssystem (1) zu erhalten;
- ggf. Kühlen des dichten, pasteurisierbaren und sterilisierbaren Verschlusssystems (1).

2. Verfahren zum Herstellen eines dichten, pasteurisierbaren und sterilisierbaren Verschlusssystems (1) nach Anspruch 1, **dadurch gekennzeichnet, dass** die Dichtung (3) eine vorgeformte Dichtung ist.

3. Verfahren zum Herstellen eines dichten, pasteurisierbaren und sterilisierbaren Verschlusssystems (1) nach Anspruch 2, **dadurch gekennzeichnet, dass** die vorgeformte Dichtung (3) aus einem thermoplastischen Elastomer, TPS-SEBS, besteht.

4. Verfahren zum Herstellen eines dichten, pasteurisierbaren und sterilisierbaren Verschlusssystems (1) nach Anspruch 1, **dadurch gekennzeichnet, dass** die Dichtung (3) in flüssiger oder pastöser Form in die kreisförmige Nut (5) vor einer Phase eines Polymerisierens eingebracht wird.

5. Verfahren zum Herstellen eines dichten, pasteurisierbaren und sterilisierbaren Verschlusssystems (1), umfassend einen Deckel (2) und eine Dichtung (3), welche dazu vorgesehen ist, hermetisch einen Behälter (4) zu verschließen, insbesondere ein Glasgefäß, wobei die Dichtung (3) auf dem Niveau der Kante eines oberen Rands positioniert ist, welchen der Behälter (4) aufweist, wobei das Verfahren **dadurch gekennzeichnet ist, dass** es wenigstens die folgenden Schritte in dieser Reihenfolge genommen umfasst:
- Bilden durch Extrusion einer mehrschichtigen Mutterrolle, welche wenigstens zwei Schichten von Polypropylen (PP) umfasst, welche beständig gegenüber einer Temperatur von zwischen 100°C und 150°C sind, welche eine zentrale Barriereschicht aus Ethylen-Vinylalkohol (EVOH) umschließen, sowie eine flexible Polymerschicht, welche die Dichtung bildet, wobei die mehrschichtige Mutterrolle für den Kontakt mit Lebensmitteln geeignet ist;
- Thermoformen und Schneiden, ausgehend von der mehrschichtigen Mutterrolle, des Deckels (2) mittels Formwerkzeugen, so dass der erhaltene Deckel (2) wenigstens auf dem Niveau seiner unteren Fläche (21) eine kreisförmige Nut (5) umfasst, welche eine Aufnahme für die Dichtung (3) bildet, welche durch die flexible Polymerschicht der mehrschichtigen Rolle gebildet ist, wobei die Dichtung (3) dazu vorgesehen ist, in Kontakt mit der Kante des oberen Rands des Behälters (4) zu kommen, wobei ein zentraler Abschnitt (23) des Deckels (2) eine konvexe Kuppel (23a) bildet, welche sich vor einem Vakuumieren nach außen erhebt und in der Lage ist, sich während des Vakuumierens zurückzuziehen, um konkav (23b) zu werden, während ein die konvexe Kuppel (23a) umgebender kreisförmiger Hals (24) auf dem Niveau der oberen Fläche (22) des Deckels (2) vorgesehen ist, wobei letzterer andererseits an seinem gesamten Umfang mit einem Verschlussrand (6) versehen ist, welcher Schnappmittel (61, 62) umfasst, welche dazu in der Lage sind, mit dem oberen Rand des Behälters (4) zusammenzuwirken;
- ggf. Kühlen des dichten, pasteurisierbaren und sterilisierbaren Verschlusssystems (1).

6. Verfahren zum Herstellen eines dichten, pasteurisierbaren und sterilisierbaren Verschlusssystems (1) nach einem der vorhergehenden Ansprüche, **dadurch gekennzeichnet, dass** die Polypropylenschicht personalisierbar ist und Farbpigmente umfasst.

7. Verfahren zum Herstellen eines dichten, pasteurisierbaren und sterilisierbaren Verschlusssystems (1) nach einem der vorhergehenden Ansprüche, **dadurch gekennzeichnet, dass** die EVOH-Barriereschicht eine Dicke aufweist, welche zwischen 10 µm und 10% der Gesamtdicke der mehrschichtigen Mutterrolle beträgt.

8. Verfahren zum Herstellen eines dichten, pasteurisierbaren und sterilisierbaren Verschlusssystems (1) nach einem der vorhergehenden Ansprüche, **dadurch gekennzeichnet, dass** der durch Thermoformen erhaltene Deckel (2) ferner eine Öffnungslasche (7) umfasst.

9. Verfahren zum Herstellen eines dichten, pasteurisierbaren und sterilisierbaren Verschlusssystems (1) nach einem der vorhergehenden Ansprüche, **dadurch gekennzeichnet, dass** der durch Thermoformen gebildete Deckel (2) ferner einen konischen Abschlussumfang (8) umfasst, welcher eine Ausnehmung auf dem Niveau der oberen Fläche (22) des Deckels (2) bildet.

10. Dichtes, pasteurisierbares und sterilisierbares Verschlusssystem (1), welches geeignet ist, durch Durchführen des Herstellungsverfahrens nach einem der vorhergehenden Ansprüche erhalten zu werden, umfassend einen Deckel (2) und eine Dichtung (3), welche dazu vorgesehen ist, hermetisch einen Behälter (4) zu verschließen, insbesondere ein Glasgefäß, wobei die Dichtung (3) auf dem Niveau der Kante eines oberen Rands positioniert ist, welchen der Behälter (4) aufweist, wobei das Verschlusssystem (1) **dadurch gekennzeichnet ist, dass** der Deckel (2) aus mehrschichtigem Kunststoffmaterial hergestellt ist, welches für den Kontakt mit Lebensmitteln geeignet ist und wenigstens zwei Schichten von Polypropylen (PP) umfasst, welche beständig gegenüber einer Temperatur von zwischen 100°C und 150°C sind und eine Barriereschicht aus Ethylen-Vinylalkohol (EVOH) umschließen, wobei der Deckel (2) wenigstens auf dem Niveau seiner unteren Fläche (21) eine kreisförmige Nut (5) umfasst, welche die Aufnahme bildet, in welcher die Dichtung (3) platziert ist, wobei ein zentraler Abschnitt (23) des Deckels (2) eine konvexe Kuppel (23a) bildet, welche sich vor einem Vakuumieren nach außen erhebt und in der Lage ist, sich während des Vakuumierens zurückzuziehen, um konkav (23b) zu werden, während ein die konvexe Kuppel (23a) umgebender kreisförmiger Hals (24) auf dem Niveau der oberen Fläche (22) des Deckels (2) vorgesehen ist, wobei letzterer andererseits an seinem gesamten Umfang mit einem Verschlussrand (6) in der Form einer Schürze versehen ist, welcher Schnappmittel (61, 62) umfasst, welche dazu in der Lage sind, mit dem oberen Rand des Behälters (4) zusammenzuwirken.

11. Dichtes, pasteurisierbares und sterilisierbares Verschlusssystem (1) nach dem vorhergehenden Anspruch, **dadurch gekennzeichnet, dass** es mit einem konischen Abschlussumfang (8) versehen ist, welcher auf dem Niveau der oberen Fläche (22) des Deckels (2) an der Basis des thermogeformten Deckels (2) für ein Zusammenwirken mit der äußeren Fläche der kreisförmigen Nut (5) eines zweiten Verschlusssystems (1) bei einem Stapeln davon gebildet ist.

12. Dichtes, pasteurisierbares und sterilisierbares Verschlusssystem (1) nach Anspruch 10 oder Anspruch 11, **dadurch gekennzeichnet, dass** der Deckel (2) eine laterale Öffnungslasche (7) umfasst.

13. Dichtes, pasteurisierbares und sterilisierbares Verschlusssystem (1) nach einem der Ansprüche 10 bis 12, **dadurch gekennzeichnet, dass** die Schnappmittel des Deckels (2), welche dazu in der Lage sind mit dem oberen Rand des Behälters (4) zusammenzuwirken, aus einem Schnapphals (62) bestehen, welcher quasi den gesamten Umfang des Verschlussrands (6) in der Form einer Schürze umgibt, ausgenommen eine Mehrzahl von gleichmäßig auf dem Umfang verteilten Abschnitten, auf deren Niveau eine Versteifung (63) vorgesehen ist.

14. Dichtes, pasteurisierbares und sterilisierbares Verschlusssystem (1) nach einem der Ansprüche 10 bis 12, **dadurch gekennzeichnet, dass** die Schnappmittel des Deckels (2), welche in der Lage sind, mit dem oberen Rand des Behälters (4) zusammenzuwirken, aus einer Mehrzahl von inneren Verschlusskerben (61) bestehen, welche gleichmäßig an der Gesamtheit des Umfangs der Schürze verteilt sind.

15. Dichtes, pasteurisierbares und sterilisierbares Verschlusssystem (1) nach einem der Ansprüche 10 bis 14, **dadurch gekennzeichnet, dass** die Dichtung (3) eine aus einem thermoplastischen Elastomer, TPS-SEBS, vorgeformte Dichtung ist.

## Claims

1. A method for manufacturing a sealed, pasteurisable and sterilisable closure system (1), comprising a lid (2) and a seal (3), intended to hermetically close a container (4), in particular a glass jar, said seal (3) being positioned at the edge of an upper ring that said container (4) comprises, said method being **characterised in that** it comprises, at least, the following steps, considered in sequence:
- forming, by extrusion, a multilayer stock roll comprising at least two layers of polypropylene (PP) resistant to a temperature between 100°C and 150°C, which frame a central barrier layer of ethylene vinyl alcohol (EVOH), said multilayer stock roll being suitable for food contact;
- thermoforming and cutting, from said multilayer stock roll, the lid (2), by means of forming moulds, so that said obtained lid (2) comprises, at least, at its lower face (21), a circular groove (5) making up a housing for the seal (3) intended to come into contact with the edge of the upper ring of the container (4), a central portion (23) of said lid (2) forming a convex dome (23a) outwardly raised before vacuumising and able to retract to become concave (23b) during vacuumising, whereas a circular groove (24) surrounding the convex dome (23a) is formed at the upper face (22) of the lid (2), the latter being moreover provided on its entire circumference with a closure rim (6) comprising snap-fitting means (61, 62) able to cooperate with said upper ring of said container (4);
- depositing said seal (3) into the circular groove (5) of the lower face of the lid to obtain said sealed, pasteurisable and sterilisable closure system (1);
- possibly, cooling said sealed, pasteurisable and sterilisable closure system (1).

2. The method for manufacturing a sealed, pasteurisable and sterilisable closure system (1) according to claim 1, **characterised in that** said seal (3) is a preformed seal.

3. The method for manufacturing a sealed, pasteurisable and sterilisable closure system (1) according to claim 2, **characterised in that** said preformed seal (3) is made of a thermoplastic elastomer, TPS-SEBS.

4. The method for manufacturing a sealed, pasteurisable and sterilisable closure system (1) according to claim 1, **characterised in that** said seal (3) is deposited in liquid or pasty form into said circular groove (5), before a polymerisation phase.

5. A method for manufacturing a sealed, pasteurisable and sterilisable closure system (1), comprising a lid (2) and a seal (3), intended to hermetically close a container (4), in particular a glass jar, said seal (3) being positioned at the edge of an upper ring that said container (4) comprises, said method being **characterised in that** it comprises, at least, the following steps, considered in sequence:
- forming, by extrusion, a multilayer stock roll comprising at least two layers of polypropylene (PP) resistant to a temperature between 100°C and 150°C, which frame a central barrier layer of ethylene vinyl alcohol (EVOH), and a flexible polymer layer constituting said seal, said multilayer stock roll being suitable for food contact;
- thermoforming and cutting, from said multilayer stock roll, the lid (2), by means of forming moulds, so that said obtained lid (2) comprises, at least at its lower face (21), a circular groove (5) making up a housing for the seal (3) formed by the flexible polymer layer of the multilayer roll, said seal (3) being intended to come into contact with the edge of the upper ring of the container (4), a central portion (23) of said lid (2) forming a convex dome (23a) outwardly raised before vacuumising and able to retract to become concave (23b) during vacuumising, whereas a circular groove (24) surrounding the convex dome (23a) is formed at the upper face (22) of the lid (2), the latter being moreover provided on its entire circumference with a closure rim (6) comprising snap-fitting means (61, 62) able to cooperate with said upper ring of said container (4);
- possibly, cooling said sealed, pasteurisable and sterilisable closure system (1).

6. The method for manufacturing a sealed, pasteurisable and sterilisable closure system (1) according to any one of the preceding claims, **characterised in that** the polypropylene layer is customisable and comprises colour pigments.

7. The method for manufacturing a sealed, pasteurisable and sterilisable closure system (1) according to any one of the preceding claims, **characterised in that** the EVOH barrier layer has a thickness between 10 µm and 10% of the total thickness of the multilayer stock roll.

8. The method for manufacturing a sealed, pasteurisable and sterilisable closure system (1) according to any one of the preceding claims, **characterised in that** said lid (2) obtained by thermoforming also comprises an opening tab (7).

9. The method for manufacturing a sealed, pasteurisable and sterilisable closure system (1) according to any one of the preceding claims, **characterised in that** said lid (2) obtained by thermoforming also comprises a conical finish circumference (8) forming a flare at the upper face (22) of the lid (2).

10. A sealed, pasteurisable and sterilisable closure system (1) capable of being obtained by implementing the manufacturing method according to any one of the preceding claims, comprising a lid (2) and a seal (3), intended to hermetically close a container (4), in particular a glass jar, said seal (3) being then positioned at the edge of an upper ring that said container (4) comprises, said closure system (1) being **characterised in that** said lid (2) is manufactured from multilayer plastic material suitable for food contact and comprising at least two layers of polypropylene (PP) resistant to a temperature between 100°C and 150°C and framing an ethylene vinyl alcohol (EVOH) barrier layer, said lid (2) comprising at least, at its lower face (21), a circular groove (5) making up the housing in which the seal (3) is placed, a central portion (23) of said lid (2) forming a convex dome (23a) outwardly raised before vacuumising and able to retract to become concave (23b) during vacuumising, whereas a circular groove (24) surrounding the convex dome (23a) is formed at the upper face (22) of the lid (2), the latter being moreover provided, on its entire circumference, with a closure rim (6) in the form of a skirt comprising snap-fitting means (61, 62) able to cooperate with said upper ring of said container (4).

11. The sealed, pasteurisable and sterilisable closure system (1) according to the preceding claim, **characterised in that** it is provided with a conical finish circumference (8) forming at the upper face (22) of the lid (2), at the base of the thermoformed lid (2), for cooperation with the external surface of the circular groove (5) of a second closure system (1) during stacking thereof.

12. The sealed, pasteurisable and sterilisable closure system (1) according to claim 10 or claim 11, **characterised in that** said lid (2) comprises a lateral opening tab (7).

13. The sealed, pasteurisable and sterilisable closure system (1) according to any one of claims 10 to 12, **characterised in that** said snap-fitting means of the lid (2) able to cooperate with the upper ring of the container (4) consist of a clipping groove (62) running over almost the entirety of the perimeter of the closure rim (6) in the form of a skirt, with the exception of a plurality of portions evenly distributed over said perimeter at which a stiffener (63) is formed.

14. A sealed, pasteurisable and sterilisable closure system (1) according to any one of claims 10 to 12, **characterised in that** said snap-fitting means of the lid (2) able to cooperate with the upper ring of the container (4) consist of a plurality of internal closure notches (61), evenly distributed over the entire circumference of said skirt.

15. A sealed, pasteurisable and sterilisable closure system (1) according to any one of claims 10 to 14, **characterised in that** said seal (3) is a preformed seal made of a thermoplastic elastomer, TPS-SEBS.
